# EUROPEAN PATENT APPLICATION

(11) **EP 4 013 134 A1**
(43) Date of publication of application: **15.06.2022**
(21) Application number: 20852926.3
(22) Date of filing: 10.08.2020
(51) Int. Cl.: H04W 52/02

(54) **COMMUNICATION METHOD, APPARATUS AND DEVICE BASED ON DUAL CONNECTIVITY CONFIGURATION, AND STORAGE MEDIUM**

(30) Priority: 15.08.2019 CN 201910754599
(71) Applicant: Huawei Technologies Co., Ltd., Longgang District Shenzhen, Guangdong 518129 (CN)
(72) Inventor: XU, Haibo, Shenzhen, Guangdong 518129 (CN); WANG, Rui, Shenzhen, Guangdong 518129 (CN); WANG, Jian, Shenzhen, Guangdong 518129 (CN)
(74) Representative: Pfenning, Meinig & Partner mbB
(86) International application number: PCT/CN2020/108086
(87) International publication number: WO 2021/027752

(57) **Abstract**

This application provides a dual connectivity configuration-based communication method, an apparatus, a device, and a storage medium. The method includes: A terminal device may receive a deactivation command sent by a master node or a secondary node. The terminal device deactivates an SCG or a PSCell according to the deactivation command. To be specific, the terminal device may deactivate the SCG or the PSCell based on an actual situation. For example, when the terminal device has a low requirement for a data transmission rate, the terminal device receives the deactivation command, and deactivates the SCG or the PSCell according to the deactivation command. After the SCG or the PSCell is deactivated, based on this, the terminal device does not need to listen on PDCCHs of the PSCell and an SCell in the SCG, and does not need to send an uplink signal such as an SRS or CSI on the PSCell and the SCell in the SCG. Therefore, power consumption of the terminal device can be reduced.

## Description

This application claims priority to Chinese Patent Application No. 201910754599.0, filed with the China National Intellectual Property Administration on August 15, 2019 and entitled "DUAL CONNECTIVITY CONFIGURATION-BASED COMMUNICATION METHOD, APPARATUS, DEVICE, AND STORAGE MEDIUM", which is incorporated herein by reference in its entirety.

### TECHNICAL FIELD

This application relates to the field of communications technologies, and in particular, to a dual connectivity configuration-based communication method, an apparatus, a device, and a storage medium.

### BACKGROUND

In an initial phase of a 5th generation (5th Generation, 5G) mobile communications system, because a 4th generation (4th Generation, 4G) mobile communications system and a 5G new radio (New Radio, NR) network coexist, to fully use an existing 4G network, an operator deploys an evolved UMTS terrestrial radio access network (Evolved UMTS Terrestrial Radio Access Network, E-UTRAN) and an NR network to simultaneously provide service transmission for a terminal device. Alternatively, the operator may deploy two 5G NR access networks to simultaneously provide service transmission for the terminal device. Such a connectivity manner in which the two access networks are used to simultaneously provide service transmission for the terminal device is referred to as a multi-radio dual connectivity (Multi-Radio Dual Connectivity, MR-DC) manner or a dual connectivity manner.

In other words, two nodes in dual connectivity provide service transmission for the terminal device. The two nodes are a master node (Master Node, MN) and a secondary node (Secondary Node, SN). A plurality of serving cells of the terminal device served by the master node are referred to as a master cell group (Master Cell Group, MCG). The MCG includes a primary cell (Primary Cell, PCell) and at least one secondary cell (Secondary Cell, SCell). The primary cell works on a primary carrier, and the terminal device establishes an initial connection or initiates a connection re-establishment process on the primary cell. All cells except the PCell in the MCG are SCells. A plurality of serving cells of the terminal device served by the secondary node are referred to as a secondary cell group (Secondary Cell Group, SCG), and the SCG includes a primary SCG cell (Primary SCG Cell, PSCell) and at least one SCell. A cell in the SCG to which the terminal device performs random access in a synchronous reconfiguration process is referred to as the PSCell, and all cells except the PSCell in the SCG are SCells.

In the conventional technology, after an SCG is configured for a terminal device, even if the terminal device has a low requirement for a data transmission rate, the terminal device still needs to listen on physical downlink control channels (Physical Downlink Control Channels, PDCCHs) of a PSCell and an SCell in the SCG, and the terminal device further needs to send an uplink signal such as a sounding reference signal (Sounding Reference Signal, SRS) or channel state information (Channel State Information, CSI) on the PSCell and the SCell in the SCG. As a result, power consumption of the terminal device is excessively high.

### SUMMARY

This application provides a dual connectivity configuration-based communication method, an apparatus, a device, and a storage medium, so that power consumption of a terminal device can be reduced.

According to a first aspect, this application provides a dual connectivity configuration-based communication method. The method is applied to a terminal device, the terminal device is connected to a master node and a secondary node, and the method includes: receiving a deactivation command, where the deactivation command is used to deactivate a secondary cell group SCG of the terminal device served by the secondary node, or is used to deactivate a primary SCG cell PSCell in the SCG; and deactivating the SCG or the PSCell according to the deactivation command. To be specific, the terminal device may deactivate the SCG or the PSCell based on an actual situation. For example, when the terminal device has a low requirement for a data transmission rate, the terminal device receives the deactivation command, and deactivates the SCG or the PSCell according to the deactivation command. After the SCG or the PSCell is deactivated, based on this, the terminal device does not need to listen on PDCCHs of the PSCell and an SCell in the SCG, and does not need to send an uplink signal such as an SRS or CSI on the PSCell and the SCell in the SCG. Therefore, power consumption of the terminal device can be reduced.

Optionally, the deactivating the SCG or the PSCell according to the deactivation command includes: resetting a medium access control MAC entity in the SCG; and/or deactivating an active bandwidth part BWP associated with the PSCell; and/or if there is an associated first deactivation timer in the PSCell and the first deactivation timer is in a running state, stopping the first deactivation timer; and/or deactivating an SCell in the SCG. To be specific, the terminal device may reserve a configuration of the MAC entity, and/or a configuration of the BWP, and/or a configuration of the first deactivation timer, and/or a configuration of the SCell, so that after receiving an activation command subsequently, the terminal device can directly use the reserved configurations. Therefore, an activation delay of the SCG or the PSCell can be reduced.

Optionally, the deactivating the SCG or the PSCell according to the deactivation command further includes: suspending a configured grant Type 1 associated with the PSCell and a configured grant Type 1 associated with the secondary cell SCell in the SCG; and/or skipping releasing physical uplink control channels PUCCHs and/or sounding reference signal resources on the PSCell and the SCell. To be specific, the terminal device may reserve a configuration of the configured grant Type 1, the PUCCH, and/or the sounding reference signal resource, so that after receiving an activation command subsequently, the terminal device can directly use the reserved configurations. Therefore, an activation delay of the SCG or the PSCell can be reduced.

Optionally, the deactivating the SCG or the PSCell according to the deactivation command further includes: running a time alignment timer TAT, and performing at least one of the following: clearing a hybrid automatic repeat request HARQ buffer of the PSCell, suspending the configured grant Type 1 associated with the PSCell, clearing a configured grant Type 2 associated with the PSCell and a configured downlink assignment associated with the PSCell, and clearing a physical uplink shared channel PUSCH resource used to report channel state information CSI on the PSCell. In this way, after receiving an activation command subsequently, the terminal device can directly use the reserved configurations. Therefore, an activation delay of the SCG or the PSCell can be reduced.

Optionally, the method further includes: receiving an activation command, where the activation command is used to activate the SCG or the PSCell; and activating the SCG or the PSCell according to the activation command. After the SCG or the PSCell is activated, a related configuration of the SCG or the PSCell may be directly used, and the secondary node does not need to re-configure the SCG or the PSCell for the terminal device, so that signaling overheads on an air interface and between the master node and the secondary node can be reduced, and an activation delay of the SCG or the PSCell can be reduced.

Optionally, the activating the SCG or the PSCell according to the activation command includes: activating a first uplink BWP and/or a first downlink BWP associated with the PSCell, where the first uplink BWP is an uplink BWP indicated by using a first configuration parameter of the PSCell, and the first downlink BWP is a downlink BWP indicated by using a second configuration parameter of the PSCell; and/or if there is an associated second deactivation timer in the PSCell and the second deactivation timer is in a stopped state, starting the second deactivation timer; and/or activating the SCell in the SCG; and/or triggering a power headroom report.

Optionally, if the configured grant Type 1 configured on the PSCell is in a suspended state, the activating the SCG or the PSCell according to the activation command further includes: initializing the configured grant Type 1 associated with the PSCell.

Optionally, after the activating the SCG or the PSCell according to the activation command, the method further includes: initiating a random access procedure on the PSCell. Based on this, the secondary node may learn that the terminal device can be scheduled in this case to transmit data on the SCG or the PSCell. This avoids a resource waste caused by scheduling the terminal device by the secondary node in advance before the terminal device completes activation processing on the SCG or the PSCell.

Optionally, the initiating a random access procedure on the PSCell includes: initiating the random access procedure on the PSCell if a time alignment timer TAT associated with the SCG or the PSCell is in a stopped state; and stopping the TAT if the TAT is in a running state.

Optionally, the activation command includes a random access preamble and a random access channel resource that are used by the terminal device in a random access procedure. Correspondingly, the initiating a random access procedure on the PSCell includes: initiating the random access procedure on the PSCell based on the random access preamble and the random access channel resource.

Optionally, the activation command is a physical downlink control channel order, the physical downlink control channel order carries indication information, and the indication information is used to indicate the terminal device to activate the SCG or the PSCell.

According to a second aspect, this application provides a dual connectivity configuration-based communication method. The method is applied to a terminal device, and the terminal device is connected to a master node and a secondary node. The method includes: receiving an activation command, where the activation command is used to activate an SCG or a PSCell; and activating the SCG or the PSCell according to the activation command. After the SCG or the PSCell is activated, a related configuration of the SCG or the PSCell may be directly used, and the secondary node does not need to re-configure the SCG or the PSCell for the terminal device, so that signaling overheads on an air interface and between the master node and the secondary node can be reduced, and an activation delay of the SCG or the PSCell can be reduced.

Optionally, the activating the SCG or the PSCell according to the activation command includes: activating a first uplink BWP and/or a first downlink BWP associated with the PSCell, where the first uplink BWP is an uplink BWP indicated by using a first configuration parameter of the PSCell, and the first downlink BWP is a downlink BWP indicated by using a second configuration parameter of the PSCell; and/or if there is an associated second deactivation timer in the PSCell and the second deactivation timer is in a stopped state, starting the second deactivation timer; and/or activating an SCell in the SCG; and/or triggering a power headroom report.

Optionally, if a configured grant Type 1 configured on the PSCell is in a suspended state, the activating the SCG or the PSCell according to the activation command further includes: initializing the configured grant Type 1 associated with the PSCell.

Optionally, after the activating the SCG or the PSCell according to the activation command, the method further includes: initiating a random access procedure on the PSCell. Based on this, the secondary node may learn that the terminal device can be scheduled in this case to transmit data on the SCG or the PSCell. This avoids a resource waste caused by scheduling the terminal device by the secondary node in advance before the terminal device completes activation processing on the SCG or the PSCell.

Optionally, the initiating a random access procedure on the PSCell includes: initiating the random access procedure on the PSCell if a time alignment timer TAT associated with the SCG or the PSCell is in a stopped state; and stopping the TAT if the TAT is in a running state.

Optionally, the activation command includes a random access preamble and a random access channel resource that are used by the terminal device in a random access procedure. Correspondingly, the initiating a random access procedure on the PSCell includes: initiating the random access procedure on the PSCell based on the random access preamble and the random access channel resource.

Optionally, the activation command is a physical downlink control channel order, the physical downlink control channel order carries indication information, and the indication information is used to indicate the terminal device to activate the SCG or the PSCell.

The following provides a dual connectivity configuration-based communication method performed on a network device side, a terminal device, a network device, a computer storage medium, and a computer program product. For effects thereof, refer to effects corresponding to the dual connectivity configuration-based communication method performed on the terminal device side. Details are not described below again.

According to a third aspect, this application provides a dual connectivity configuration-based communication method. The method is applied to a master node or a secondary node, and a terminal device is connected to the master node and the secondary node. The method includes: generating a deactivation command, where the deactivation command is used to deactivate a secondary cell group SCG of the terminal device served by the secondary node, or is used to deactivate a primary SCG cell PSCell in the SCG; and sending the deactivation command to the terminal device.

Optionally, the method further includes: generating an activation command, where the activation command is used to activate the SCG or the PSCell, and sending the activation command to the terminal device.

According to a fourth aspect, this application provides a dual connectivity configuration-based communication method. The method is applied to a master node or a secondary node, and a terminal device is connected to the master node and the secondary node. The method includes: generating an activation command, where the activation command is used to activate an SCG or a PSCell; and sending the activation command to the terminal device.

According to a fifth aspect, this application provides a terminal device. The terminal device is connected to a master node and a secondary node, and the terminal device includes:
a first receiving module, configured to receive a deactivation command, where the deactivation command is used to deactivate a secondary cell group SCG of the terminal device served by the secondary node, or is used to deactivate a primary SCG cell PSCell in the SCG; and
a deactivation module, configured to deactivate the SCG or the PSCell according to the deactivation command.

According to a sixth aspect, this application provides a network device. The network device is a master node or a secondary node, and a terminal device is connected to the master node and the secondary node. The network device includes:
a first generation module, configured to generate a deactivation command, where the deactivation command is used to deactivate a secondary cell group SCG of the terminal device served by the secondary node, or is used to deactivate a primary SCG cell PSCell in the SCG; and
a first sending module, configured to send the deactivation command to the terminal device.

According to a seventh aspect, this application provides a terminal device, including a memory and a processor.

The memory is configured to store computer instructions. The processor is configured to run the computer instructions stored in the memory to implement the dual connectivity configuration-based communication method according to the first aspect, the second aspect, and the optional manners of the first aspect or the second aspect.

According to an eighth aspect, this application provides a network device, including a memory and a processor.

The memory is configured to store computer instructions. The processor is configured to run the computer instructions stored in the memory to implement the dual connectivity configuration-based communication method according to the third aspect, the fourth aspect, and the optional manners of the third aspect or the fourth aspect.

According to a ninth aspect, this application provides a computer storage medium, including computer instructions. The computer instructions are used to implement the dual connectivity configuration-based communication method according to the first aspect, the second aspect, the third aspect, the fourth aspect, and the optional manners of the foregoing aspects.

According to a tenth aspect, this application provides a computer program product, including computer instructions. The computer instructions are used to implement the dual connectivity configuration-based communication method according to the first aspect, the second aspect, the third aspect, the fourth aspect, and the optional manners of the foregoing aspects.

This application provides a dual connectivity configuration-based communication method, an apparatus, a device, and a storage medium. The terminal device may receive a deactivation command sent by a master node or a secondary node. The terminal device deactivates an SCG or a PSCell according to the deactivation command. To be specific, the terminal device may deactivate the SCG or the PSCell based on an actual situation. For example, when the terminal device has a low requirement for a data transmission rate, the terminal device receives the deactivation command, and deactivates the SCG or the PSCell according to the deactivation command. After the SCG or the PSCell is deactivated, based on this, the terminal device does not need to listen on PDCCHs of the PSCell and an SCell in the SCG, and does not need to send an uplink signal such as an SRS or CSI on the PSCell and the SCell in the SCG. Therefore, power consumption of the terminal device can be reduced. In addition, the master node may send an activation command to the terminal device. The terminal device activates the SCG or the PSCell according to the activation command. To be specific, the terminal device may activate the SCG or the PSCell based on an actual situation. For example, when the terminal device has a high requirement for a data transmission rate, the terminal device receives the activation command, and activates the SCG or the PSCell according to the activation command. As described above, after the SCG or the PSCell is deactivated, a related configuration of the SCG or the PSCell is still reserved by the terminal device. Therefore, after the SCG or the PSCell is activated, the related configuration of the SCG or the PSCell may be directly used, and the secondary node does not need to re-configure the SCG or the PSCell for the terminal device, so that signaling overheads on an air interface and between the master node and the secondary node can be reduced, and an activation delay of the SCG or the PSCell can be reduced.

### BRIEF DESCRIPTION OF DRAWINGS

FIG. 1 is a schematic diagram of EN-DC according to an embodiment of this application;
FIG. 2 is a schematic diagram of NGEN-DC according to an embodiment of this application;
FIG. 3 is a schematic diagram of NE-DC according to an embodiment of this application;
FIG. 4 is a schematic diagram of NR-DC according to an embodiment of this application;
FIG. 5 is an interaction flowchart of a dual connectivity configuration-based communication method according to an embodiment of this application;
FIG. 6 is an interaction flowchart of a dual connectivity configuration-based communication method according to another embodiment of this application;
FIG. 7 is an interaction flowchart of a dual connectivity configuration-based communication method according to still another embodiment of this application;
FIG. 8 is an interaction flowchart of a dual connectivity configuration-based communication method according to yet another embodiment of this application;
FIG. 9 is a schematic diagram of a terminal device 900 according to an embodiment of this application;
FIG. 10 is a schematic diagram of a network device 1000 according to an embodiment of this application;
FIG. 11 is a schematic diagram of a terminal device 1100 according to an embodiment of this application; and
FIG. 12 is a schematic diagram of a network device 1200 according to an embodiment of this application.

### DESCRIPTION OF EMBODIMENTS

Currently, MR-DC includes the following four network architectures:

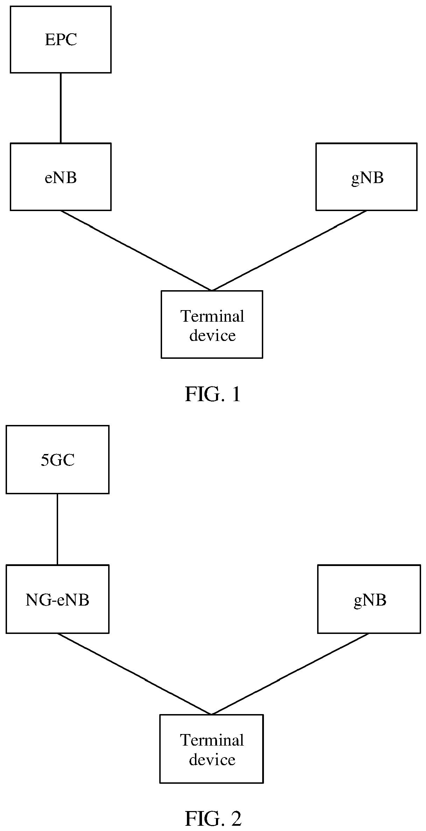

E-UTRAN-NR dual connectivity (E-UTRAN-NR Dual Connectivity, EN-DC): FIG. 1 is a schematic diagram of EN-DC according to an embodiment of this application. As shown in FIG. 1, this dual connectivity manner is an evolved packet core (Evolved Packet Core, EPC) dual connectivity manner in which an evolved NodeB (evolved NodeB, eNB for short) in a long term evolution (Long Term Evolution, LTE) network is a master node, a next generation NodeB gNB in an NR network is a secondary node, and the eNB is connected to a 4G core network.

NG-RAN E-UTRAN-NR dual connectivity (NG-RAN E-UTRAN-NR Dual Connectivity, NGEN-DC): FIG. 2 is a schematic diagram of NGEN-DC according to an embodiment of this application. As shown in FIG. 2, this dual connectivity manner is a dual connectivity manner in which an NG-eNB is a master node, a gNB is a secondary node, and the master node is connected to a 5G core network (5G Core, 5GC).

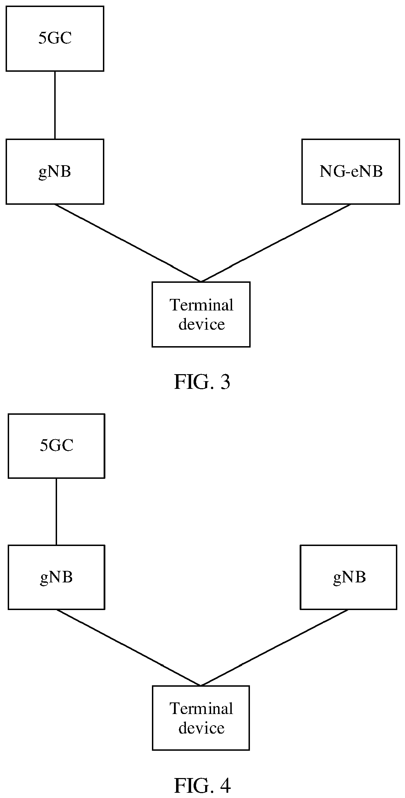

NR-E-UTRAN dual connectivity (NR-E-UTRAN Dual Connectivity, NE-DC): FIG. 3 is a schematic diagram of NE-DC according to an embodiment of this application. As shown in FIG. 3, this dual connectivity manner is a dual connectivity manner in which a gNB is a master node, an NG-eNB in eLTE is a secondary node, and the master node is connected to a 5GC.

NR-NR dual connectivity (NR-NR Dual Connectivity, NR-DC): FIG. 4 is a schematic diagram of NR-DC according to an embodiment of this application. As shown in FIG. 4, this dual connectivity manner is a dual connectivity manner in which one gNB is a master node, the other gNB is a secondary node, and the master node is connected to a 5GC.

It should be noted that technical solutions of this application may be based on the foregoing four dual connectivity manners, but are not limited to the foregoing dual connectivity manners.

As described above, in the conventional technology, after an SCG is configured for a terminal device, even if the terminal device has a low requirement for a data transmission rate, the terminal device still needs to listen on PDCCHs of a PSCell and an SCell in the SCG, and the terminal device further needs to send an uplink signal such as an SRS or CSI on the PSCell and the SCell in the SCG. As a result, power consumption of the terminal device is excessively high. This application provides a dual connectivity configuration-based communication method, an apparatus, a device, and a storage medium, to resolve this technical problem.

A main idea of the technical solutions of this application is to introduce a mechanism for activating and deactivating an SCG or a PSCell. Based on this, when the terminal device has a low requirement for a data transmission rate, to reduce power consumption of the terminal device, a master node or a secondary node may send a deactivation command to the terminal device, to deactivate an SCG or a PSCell for the terminal device. However, when the terminal device has a high requirement for the data transmission rate, the master node may send an activation command to the terminal device, to activate the SCG or the PSCell for the terminal device. After the SCG or the PSCell is deactivated, the terminal device may continue to reserve a related configuration of the SCG or the PSCell. Therefore, signaling overheads on an air interface and between the master node and the secondary node can be reduced.

It should be noted that a node (including a master node and a secondary node) in the embodiments of the present invention may be a base transceiver station (Base Transceiver Station, BTS for short) in a global system for mobile communications (Global System for Mobile communications, GSM for short) or code division multiple access (Code Division Multiple Access, CDMA for short), may be a NodeB (NodeB, NB for short) in wideband code division multiple access (Wideband Code Division Multiple Access, WCDMA for short), may be an eNB, an AP, or a relay station in an LTE network, may be an NG-eNB in eLTE, may be a gNB in 5G NR, or the like. This is not limited.

In addition, the terminal device in the embodiments of the present invention may be a device that provides a user with voice and/or data connectivity, for example, may be a handheld device having a wireless connection function, or another processing device connected to a wireless modem. The terminal device may be a mobile terminal, for example, a mobile phone (or referred to as a "cellular" phone), and a computer that has a mobile terminal. For example, the terminal device may be a portable, pocket-sized, handheld, computer built-in, or in-vehicle mobile apparatus, which exchanges voice and/or data with a radio access network. The terminal device may also be referred to as a subscriber unit (Subscriber Unit), a subscriber station (Subscriber Station), a mobile station (Mobile Station), a remote station (Remote Station), an access point (Access Point), a remote terminal (Remote Terminal), an access terminal (Access Terminal), a user terminal (User Terminal), a user agent (User Agent), or user equipment (User Equipment). This is not limited herein.

The following describes the technical solutions of this application in detail.

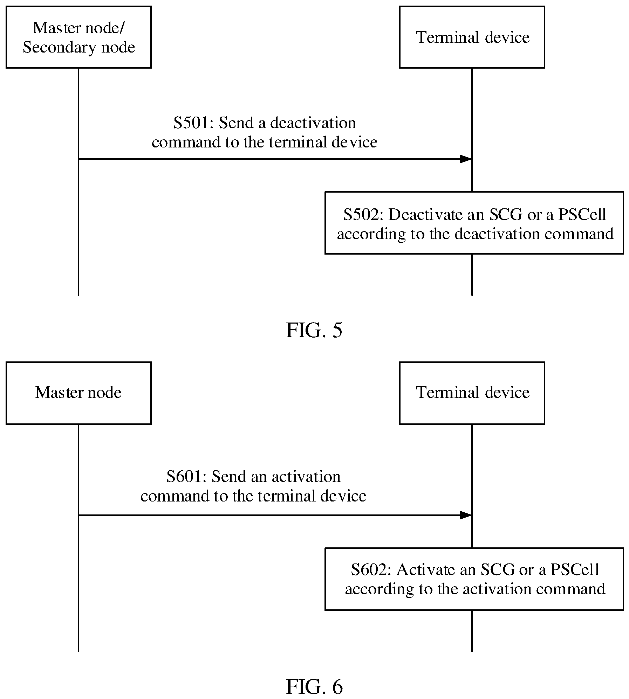

FIG. 5 is an interaction flowchart of a dual connectivity configuration-based communication method according to an embodiment of this application. Network elements in the method include a master node/secondary node and a terminal device. As shown in FIG. 5, the method includes the following steps.

Step S501: The master node/secondary node sends a deactivation command to the terminal device.

Step S502: The terminal device deactivates an SCG or a PSCell according to the deactivation command.

Step S501 is described as follows:

The deactivation command is used to deactivate the secondary cell group SCG of the terminal device served by the secondary node, or is used to deactivate the PSCell in the SCG. After the SCG is deactivated, the terminal device may continue to reserve a related configuration of the SCG. The related configuration of the SCG includes a physical layer configuration of an SCell, a medium access control (Medium Access Control, MAC) layer configuration of the SCell, and the like. Similarly, after the PSCell is deactivated, the terminal device may continue to reserve a related configuration of the PSCell. The related configuration of the PSCell includes a physical layer configuration of the PSCell, a MAC layer configuration, and the like.

Optionally, the deactivation command may be MAC layer signaling or physical layer signaling. Therefore, an activation delay of the SCG or the PSCell can be reduced.

Step S502 is described as follows: There are the following optional manners in which the terminal device deactivates the SCG or the PSCell.

Optional manner 1: The terminal device resets a MAC entity in the SCG; and/or
the terminal device deactivates an active bandwidth part (Bandwidth Part, BWP) associated with the PSCell; and/or
if there is an associated first deactivation timer in the PSCell and the first deactivation timer is in a running state, the terminal device stops the first deactivation timer; and/or
the terminal device deactivates an SCell in the SCG.

Optional manner 2: The terminal device resets a MAC entity in the SCG, and the terminal device does not release an associated configured grant Type 1 (Configured grant Type 1) configured on the PSCell and/or an associated configured grant Type 1 configured on an SCell in the SCG, but suspends (suspend) the associated configured grant Type 1 (Configured grant Type 1) configured on the PSCell and/or the associated configured grant Type 1 configured on the SCell in the SCG; and/or does not release physical uplink control channels (Physical Uplink Control Channels, PUCCHs)/a physical uplink control channel and/or SRS resources/an SRS resource on the PSCell and/or the SCell; and/or
the terminal device deactivates an active BWP associated with the PSCell; and/or
if there is an associated first deactivation timer in the PSCell and the first deactivation timer is in a running state, the terminal device stops the first deactivation timer; and/or
the terminal device deactivates an SCell in the SCG.

The associated configured grant Type 1 configured on the PSCell is an uplink grant configured by the secondary node for the terminal device by using radio resource control (Radio Resource Control, RRC) signaling. The associated configured grant Type 1 configured on the SCell is an uplink grant configured by the corresponding master node or the corresponding secondary node for the terminal device by using RRC signaling.

Optionally, that PUCCHs and/or SRS resources on the PSCell and the SCell are not released means that the MAC entity in the SCG of the terminal device does not notify an RRC layer to release the PUCCHs and/or the SRS resources.

Optional manner 3: The terminal device resets a MAC entity in the SCG, and keeps a time alignment timer running; and/or
the terminal device deactivates an active BWP associated with the PSCell; and/or
if there is an associated first deactivation timer in the PSCell and the first deactivation timer is in a running state, the terminal device stops the first deactivation timer; and/or
the terminal device deactivates an SCell in the SCG.

The terminal device runs the time alignment timer (Time Alignment Timer, TAT), and performs at least one of the following: clearing a hybrid automatic repeat request (Hybrid Automatic Repeat Request, HARQ) buffer of the PSCell, suspending the configured grant Type 1 (Configured grant Type 1) associated with the PSCell, clearing a configured downlink assignment associated with the PSCell and a configured grant Type 2 (configured grant Type 2) associated with the PSCell, and clearing a physical uplink shared channel (Physical Uplink Shared Channel, PUSCH) resource used to report CSI on the PSCell.

The HARQ buffer of the PSCell is a buffer used to store a HARQ of the PSCell.

The configured downlink assignment (configured downlink assignment) associated with the PSCell is a downlink assignment configured by the secondary node for the terminal device by using the RRC signaling and activated by using a PDCCH.

The configured grant Type 2 (configured grant Type 2) associated with the PSCell is an uplink grant configured by the secondary node for the terminal device by using RRC signaling and activated by using a PDCCH.

In the foregoing optional manner 1, optional manner 2, and optional manner 3, that the terminal device resets a MAC entity in the SCG includes: stopping all timers, stopping a random access procedure that is being performed, and canceling a triggered scheduling request, a buffer status report, a power headroom report, and the like.

A BWP associated with the PSCell includes an active BWP and/or an inactive BWP. The terminal device may deactivate the active BWP associated with the PSCell.

Optionally, the deactivation timer is used by the terminal device to automatically deactivate the PSCell when the deactivation timer expires.

Optionally, the terminal device may deactivate all SCells in the SCG.

In conclusion, an embodiment of this application provides a dual connectivity configuration-based communication method. A terminal device may deactivate an SCG or a PSCell based on an actual situation. For example, when the terminal device has a low requirement for a data transmission rate, the terminal device receives a deactivation command, and deactivates the SCG or the PSCell according to the deactivation command. After the SCG or the PSCell is deactivated, based on this, the terminal device does not need to listen on PDCCHs of the PSCell and an SCell in the SCG, and does not need to send an uplink signal such as an SRS or CSI on the PSCell and the SCell in the SCG. Therefore, power consumption of the terminal device can be reduced.

FIG. 6 is an interaction flowchart of a dual connectivity configuration-based communication method according to another embodiment of this application. Network elements in the method include a master node and a terminal device. As shown in FIG. 6, the method includes the following steps.

Step S601: The master node sends an activation command to the terminal device.

Step S602: The terminal device activates an SCG or a PSCell according to the activation command.

Step S601 is described as follows: The activation command is used to activate the SCG or the PSCell. After the SCG is activated, the terminal device may continue to use a reserved related configuration of the SCG. As described above, the related configuration of the SCG includes a physical layer configuration of an SCell, a MAC layer configuration, and the like. Similarly, after the PSCell is activated, the terminal device may continue to use a reserved related configuration of the PSCell. The related configuration of the PSCell includes a physical layer configuration of the PSCell, a MAC layer configuration, and the like.

Optionally, the activation command may be MAC layer signaling or physical layer signaling. Therefore, an activation delay of the SCG or the PSCell can be reduced.

Step S602 is described as follows:

There are the following optional manners in which the terminal device activates the SCG or the PSCell.

The terminal device activates a first uplink BWP and/or a first downlink BWP associated with the PSCell, where the first uplink BWP is an uplink BWP indicated by using a first configuration parameter (firstActiveUplinkBWP-ID) of the PSCell, and the first downlink BWP is a downlink BWP indicated by using a second configuration parameter (firstActiveDownlinkBWP-ID) of the PSCell; and/or
if there is an associated second deactivation timer in the PSCell and the second deactivation timer is in a stopped state, the terminal device starts the second deactivation timer; and/or
the terminal device activates an SCell in the SCG; and/or
the terminal device triggers a power headroom report.

It should be noted that, in addition to indicating the first uplink BWP by using the first configuration parameter and indicating the first downlink BWP by using the second configuration parameter, the master node may further send two additional pieces of indication information to the terminal device. The two pieces of indication information are respectively used to indicate the first uplink BWP and the first downlink BWP.

Optionally, the terminal device may activate all SCells in the SCG.

In addition, if a configured grant Type 1 (Configured grant Type 1) configured on the PSCell is in a suspended state, the terminal device further needs to initialize the configured grant Type 1 associated with the PSCell, to reuse the configured grant Type 1.

It should be noted that this embodiment of this application and the previous embodiment may be independently performed; or this embodiment of this application may be performed after the previous embodiment is performed.

In conclusion, an embodiment of this application provides a dual connectivity configuration-based communication method. A terminal device may activate an SCG or a PSCell based on an actual situation. For example, when the terminal device has a high requirement for a data transmission rate, the terminal device receives an activation command, and activates the SCG or the PSCell according to the activation command. As described above, after the SCG or the PSCell is deactivated, a related configuration of the SCG or the PSCell is still reserved by the terminal device. Therefore, after the SCG or the PSCell is activated, the related configuration of the SCG or the related configuration of the PSCell may be directly used, and a secondary node does not need to re-configure the SCG or the PSCell for the terminal device, so that signaling overheads on an air interface and between a master node and the secondary node can be reduced, and an activation delay of the SCG or the PSCell can be reduced.

After receiving the activation command sent by a network device and completing activation processing on the SCG or the PSCell, the terminal device may start to listen on PDCCHs of the PSCell and the SCell in the SCG. However, because the secondary node does not determine a time point at which the terminal device receives the activation command, the secondary node cannot determine a time point at which the terminal device completes activation processing on the SCG or the PSCell and a time point at which the terminal device starts to be scheduled to transmit data on the PSCell and the SCell in the SCG. Therefore, the following technical solutions may be used to resolve the following problem: how to enable the secondary node to learn that the terminal device has completed activation processing on the SCG or the PSCell, so that the terminal device can receive PDCCHs of the PSCell and the SCell in the SCG.

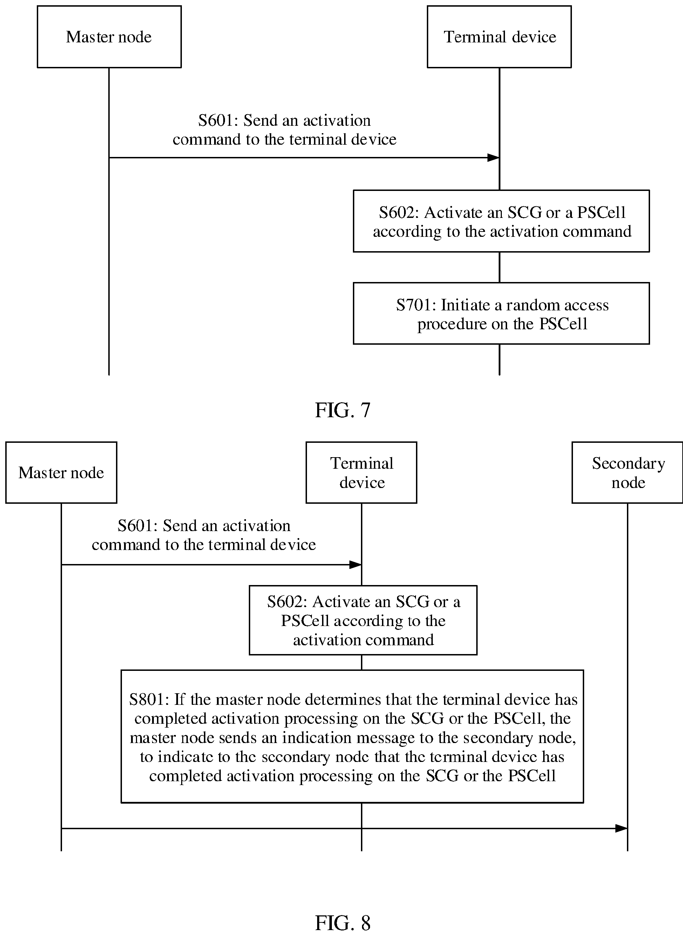

FIG. 7 is an interaction flowchart of a dual connectivity configuration-based communication method according to still another embodiment of this application. Network elements in the method include a master node and a terminal device. As shown in FIG. 7, after step S602, the method further includes the following step.

Step S701: The terminal device initiates a random access procedure on a PSCell.

In an optional manner, the activation command is a control element (Control Element, CE) at a MAC layer or downlink control information (Downlink Control Information, DCI) at a physical layer. The activation command carries a random access preamble and a random access channel resource that are used by the terminal device in a random access procedure. Based on this, the terminal device may initiate the random access procedure on the PSCell based on the random access preamble and the random access channel resource.

In another optional manner, the activation command is a command obtained by improving an existing PDCCH order (order), and the existing PDCCH order includes the random access preamble and the random access channel resource. In this application, the PDCCH order further carries indication information used to indicate the terminal device to activate an SCG or the PSCell.

It should be noted that in one case, the terminal device initiates the random access procedure on the PSCell provided that the terminal device completes activation processing on the SCG or the PSCell. In addition, if a time alignment timer TAT associated with the SCG or the PSCell is in a running state, the terminal device stops the TAT. In another case, after completing activation processing on the SCG or the PSCell, the terminal device initiates the random access procedure on the PSCell if a time alignment timer TAT associated with the SCG or the PSCell is in a stopped state. On the contrary, if the time alignment timer TAT associated with the SCG or the PSCell is in a running state, the terminal device does not initiate the random access procedure on the PSCell and stops the TAT.

In this embodiment of this application, the terminal device initiates the random access procedure on the PSCell after the terminal device completes activation processing on the SCG or the PSCell. Based on this, a secondary node may learn that the terminal device can be scheduled in this case to transmit data on the SCG or the PSCell. This avoids a resource waste caused by scheduling the terminal device by the secondary node in advance before the terminal device completes activation processing on the SCG or the PSCell.

FIG. 8 is an interaction flowchart of a dual connectivity configuration-based communication method according to yet another embodiment of this application. Network elements in the method include a master node, a secondary node, and a terminal device. This embodiment and the previous embodiment are parallel solutions. As shown in FIG. 8, after step S602, the method further includes the following step.

Step S801: If the master node determines that the terminal device has completed activation processing on an SCG or a PSCell, the master node sends an indication message to the secondary node, to indicate to the secondary node that the terminal device has completed activation processing on the SCG or the PSCell.

Optionally, a manner in which the master node determines that the terminal device has completed activation processing on the SCG or the PSCell may be as follows: After completing activation processing on the SCG or the PSCell, the terminal device sends a feedback message to the master node, to notify the master node that the terminal device has successfully received an activation command on the SCG or the PSCell. In this case, the master node immediately sends an indication message to the secondary node, to indicate that the terminal device has completed activation processing on the SCG or the PSCell. Alternatively, after completing activation processing on the SCG or the PSCell, the terminal device sends a feedback message to the master node, to notify the master node that the terminal device has successfully received an activation command on the SCG or the PSCell. In this case, the master node may determine, based on a processing capability of the terminal device, a time point at which the terminal device completes activation processing on the SCG or the PSCell, and send an indication message to the secondary node, to indicate a time point at which the terminal device has completed activation processing on the SCG or the PSCell.

In this embodiment of this application, after the terminal device completes activation processing on the SCG or the PSCell, the master node can determine a time point at which the terminal device completes activation processing on the SCG or the PSCell, and send an indication message to the secondary node, to indicate to the secondary node that the terminal device has completed activation processing on the SCG or the PSCell. Based on this, the secondary node may learn that the terminal device can be scheduled in this case to transmit data on the SCG or the PSCell. This avoids a resource waste caused by scheduling the terminal device by the secondary node in advance before the terminal device completes activation processing on the SCG or the PSCell.

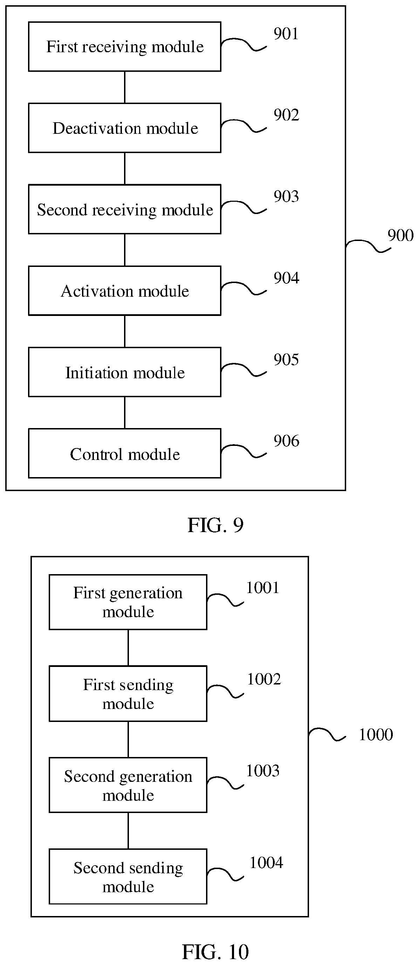

FIG. 9 is a schematic diagram of a terminal device 900 according to an embodiment of this application. The terminal device is connected to a master node and a secondary node, and the terminal device 900 includes:
a first receiving module 901, configured to receive a deactivation command, where the deactivation command is used to deactivate a secondary cell group SCG of the terminal device served by the secondary node, or is used to deactivate a primary SCG cell PSCell in the SCG; and
a deactivation module 902, configured to deactivate the SCG or the PSCell according to the deactivation command.

Optionally, the deactivation module 902 is specifically configured to:
reset a medium access control MAC entity in the SCG; and/or
deactivate an active bandwidth part BWP associated with the PSCell; and/or
if there is an associated first deactivation timer in the PSCell and the first deactivation timer is in a running state, stop the first deactivation timer; and/or
deactivate an SCell in the SCG.

Optionally, the deactivation module 902 is further configured to:
suspend a configured grant Type 1 associated with the PSCell and/or a configured grant Type 1 associated with the secondary cell SCell in the SCG; and/or
skip releasing PUCCHs/a PUCCH and/or sounding reference signal resources/a sounding reference signal resource on the PSCell and/or the SCell.

Optionally, the deactivation module 902 is further configured to: run a time alignment timer TAT, and perform at least one of the following: clearing a hybrid automatic repeat request HARQ buffer of the PSCell, suspending the configured grant Type 1 associated with the PSCell, clearing a configured grant Type 2 associated with the PSCell and a configured downlink assignment associated with the PSCell, and clearing a physical uplink shared channel PUSCH resource used to report channel state information CSI on the PSCell.

Optionally, the terminal device further includes:
a second receiving module 903, configured to receive an activation command, where the activation command is used to activate the SCG or the PSCell; and
an activation module 904, configured to activate the SCG or the PSCell according to the activation command.

Optionally, the activation module 904 is specifically configured to:
activate a first uplink BWP and/or a first downlink BWP associated with the PSCell, where the first uplink BWP is an uplink BWP indicated by using a first configuration parameter of the PSCell, and the first downlink BWP is a downlink BWP indicated by using a second configuration parameter of the PSCell; and/or
if there is an associated second deactivation timer in the PSCell and the second deactivation timer is in a stopped state, start the second deactivation timer; and/or
activate the SCell in the SCG; and/or
trigger a power headroom report.

Optionally, the activation module 904 is further configured to: if the configured grant Type 1 configured on the PSCell is in a suspended state, initialize the configured grant Type 1 associated with the PSCell.

Optionally, the terminal device 900 further includes an initiation module 905, configured to initiate a random access procedure on the PSCell.

Optionally, the initiation module 905 is specifically configured to initiate the random access procedure on the PSCell if a TAT associated with the SCG or the PSCell is in a stopped state.

Optionally, the terminal device 900 further includes a control module 906, configured to stop the TAT if the TAT is in a running state.

Optionally, the activation command includes a random access preamble and a random access channel resource that are used by the terminal device in a random access procedure. The initiation module 905 is specifically configured to initiate the random access procedure on the PSCell based on the random access preamble and the random access channel resource.

Optionally, the activation command is a PDCCH order, the PDCCH order carries indication information, and the indication information is used to indicate the terminal device to activate the SCG or the PSCell.

An embodiment of this application provides a terminal device. The terminal device may be configured to perform the dual connectivity configuration-based communication method on the terminal device side. For content and effects of the terminal device, refer to the method embodiment part. Details are not described again.

FIG. 10 is a schematic diagram of a network device 1000 according to an embodiment of this application. As shown in FIG. 10, the network device 1000 is a master node or a secondary node, a terminal device is connected to the master node and the secondary node, and the network device includes:
a first generation module 1001, configured to generate a deactivation command, where the deactivation command is used to deactivate a secondary cell group SCG of the terminal device served by the secondary node, or is used to deactivate a primary SCG cell PSCell in the SCG; and
a first sending module 1002, configured to send the deactivation command to the terminal device.

Optionally, the network device 1000 further includes:
a second generation module 1003, configured to generate an activation command, where the activation command is used to activate the SCG or the PSCell; and
a second sending module 1004, configured to send the activation command to the terminal device.

An embodiment of this application provides a network device. The network device may be configured to perform the dual connectivity configuration-based communication method on the network device side. For content and effects of the network device, refer to the method embodiment part. Details are not described again.

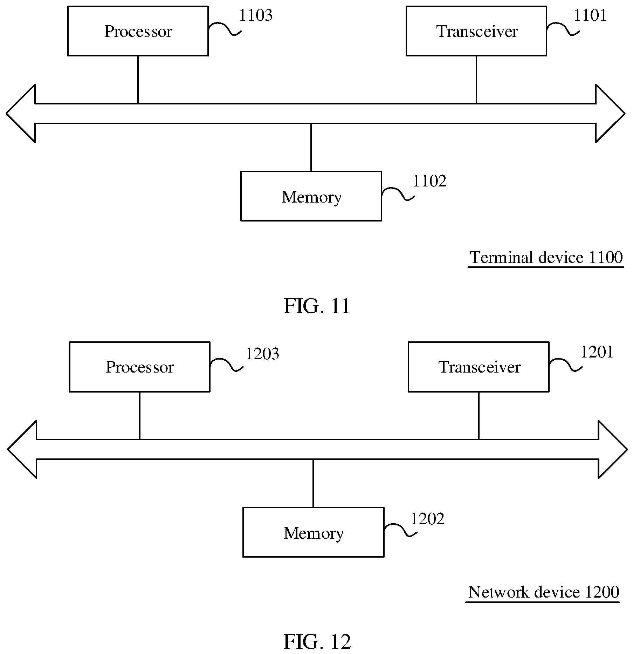

FIG. 11 is a schematic diagram of a terminal device 1100 according to an embodiment of this application. As shown in FIG. 11, the terminal device 1100 includes a transceiver 1101, a memory 1102, and one or more processors 1103. The processor 1103 may also be referred to as a processing unit, and may implement a specific control or processing function. The processor 1103 may be a general-purpose processor, a dedicated processor, or the like. For example, the processor 1103 may be a baseband processor or a central processing unit. The baseband processor may be configured to process a communications protocol and communication data. The central processing unit may be configured to: control a communications device, execute a software program, and process data of the software program. The memory 1102 is configured to store computer-executable instructions, so that the processor 1103 implements the dual connectivity configuration-based communication method performed by the terminal device. The transceiver 1101 may be configured to implement data transmission between the terminal device 1100 and another device.

The processor 1103 and the transceiver 1101 described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may also be manufactured by using various IC process technologies, for example, a complementary metal oxide semiconductor (complementary metal oxide semiconductor, CMOS), an n-type metal oxide semiconductor (n-type Metal oxide semiconductor, NMOS), a positive-channel metal oxide semiconductor (positive-channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The terminal device provided in this embodiment of this application may be configured to perform the dual connectivity configuration-based communication method performed on the terminal device side. For content and effects of the terminal device, refer to the method embodiment part. Details are not described again.

FIG. 12 is a schematic diagram of a network device 1200 according to an embodiment of this application. As shown in FIG. 12, the network device 1200 includes a transceiver 1201, a memory 1202, and one or more processors 1203. The processor 1203 may also be referred to as a processing unit, and may implement a specific control or processing function. The processor 1203 may be a general-purpose processor, a dedicated processor, or the like. For example, the processor 1203 may be a baseband processor or a central processing unit. The baseband processor may be configured to process a communications protocol and communication data. The central processing unit may be configured to: control a communications device, execute a software program, and process data of the software program. The memory 1202 is configured to store computer-executable instructions, so that the processor 1203 implements the dual connectivity configuration-based communication method performed by the network device. The transceiver 1201 may be configured to implement data transmission between the network device 1200 and another device.

The processor 1203 and the transceiver 1201 described in this application may be implemented on an IC, an analog IC, an RFIC, a mixed-signal IC, an ASIC, a PCB, an electronic device, or the like. The processor and transceiver may also be manufactured by using various IC process technologies, for example, a CMOS, an NMOS, a PMOS, a BJT, a bipolar CMOS (BiCMOS), silicon germanium (SiGe), and gallium arsenide (GaAs)

The network device provided in this embodiment of this application may be configured to perform the dual connectivity configuration-based communication method. For content and effects of the network device, refer to the method embodiment part. Details are not described again.

This application further provides a computer storage medium. The storage medium includes computer-executable instructions. When the instructions are executed by a computer, the computer is enabled to implement the dual connectivity configuration-based communication method. For content and effects of the computer storage medium, refer to the foregoing method embodiments.

This application further provides a computer program product. The program product includes computer-executable instructions. When the instructions are executed by a computer, the computer is enabled to implement the dual connectivity configuration-based communication method. For content and effects of the computer program product, refer to the foregoing method embodiments.

Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) or a processor (processor) to perform all or some of the steps of the methods that are in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

All or some of the foregoing embodiments may be implemented by using software, hardware, firmware, or any combination thereof. When the software is used to implement the embodiments, all or a part of the embodiments may be implemented in a form of a computer program product. The computer program product includes one or more computer-executable instructions. When the computer program instructions are loaded and executed on a computer, the procedures or functions according to the embodiments of this application are all or partially generated. The computer may be a general-purpose computer, a dedicated computer, a computer network, or another programmable apparatus. The computer-executable instructions may be stored in a computer-readable storage medium or may be transmitted from a computer-readable storage medium to another computer-readable storage medium. For example, the computer-executable instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

A person skilled in the art may clearly understand that, for the purpose of convenient and brief description, for a detailed working process of the foregoing system, apparatus, and unit, refer to a corresponding process in the foregoing method embodiments, and details are not described herein again. In addition, the method embodiments and the apparatus embodiments may also be mutually referenced. Same or corresponding content in different embodiments may be mutually cited. Details are not described again.

## Claims

1. A dual connectivity configuration-based communication method, wherein the method is applied to a terminal device, the terminal device is connected to a master node and a secondary node, and the method comprises:
receiving a deactivation command, wherein the deactivation command is used to deactivate a secondary cell group SCG of the terminal device served by the secondary node, or is used to deactivate a primary SCG cell PSCell in the SCG; and
deactivating the SCG or the PSCell according to the deactivation command.

2. The method according to claim 1, wherein the deactivating the SCG or the PSCell according to the deactivation command comprises:
resetting a medium access control MAC entity in the SCG; and/or
deactivating an active bandwidth part BWP associated with the PSCell; and/or
if there is an associated first deactivation timer in the PSCell and the first deactivation timer is in a running state, stopping the first deactivation timer; and/or
deactivating an SCell in the SCG.

3. The method according to claim 2, wherein the deactivating the SCG or the PSCell according to the deactivation command further comprises:
suspending a configured grant Type 1 associated with the PSCell and a configured grant Type 1 associated with the secondary cell SCell in the SCG; and/or
skipping releasing physical uplink control channels PUCCHs and/or sounding reference signal resources on the PSCell and the SCell.

4. The method according to claim 2, wherein the deactivating the SCG or the PSCell according to the deactivation command further comprises:
running a time alignment timer TAT, and performing at least one of the following:
clearing a hybrid automatic repeat request HARQ buffer of the PSCell, suspending the configured grant Type 1 associated with the PSCell, clearing a configured grant Type 2 associated with the PSCell and a configured downlink assignment associated with the PSCell, and clearing a physical uplink shared channel PUSCH resource used to report channel state information CSI on the PSCell.

5. The method according to any one of claims 1 to 4, further comprising:
receiving an activation command, wherein the activation command is used to activate the SCG or the PSCell; and
activating the SCG or the PSCell according to the activation command.

6. The method according to claim 5, wherein the activating the SCG or the PSCell according to the activation command comprises:
activating a first uplink BWP and/or a first downlink BWP associated with the PSCell, wherein the first uplink BWP is an uplink BWP indicated by using a first configuration parameter of the PSCell, and the first downlink BWP is a downlink BWP indicated by using a second configuration parameter of the PSCell; and/or
if there is an associated second deactivation timer in the PSCell and the second deactivation timer is in a stopped state, starting the second deactivation timer; and/or
activating the SCell in the SCG; and/or
triggering a power headroom report.

7. The method according to claim 6, wherein if the configured grant Type 1 configured on the PSCell is in a suspended state, the activating the SCG or the PSCell according to the activation command further comprises:
initializing the configured grant Type 1 associated with the PSCell.

8. The method according to any one of claims 1 to 7, wherein after the activating the SCG or the PSCell according to the activation command, the method further comprises:
initiating a random access procedure on the PSCell.

9. The method according to claim 8, wherein the initiating a random access procedure on the PSCell comprises:
initiating the random access procedure on the PSCell if a time alignment timer TAT associated with the SCG or the PSCell is in a stopped state.

10. The method according to claim 9, further comprising:
stopping the TAT if the TAT is in a running state.

11. The method according to claim 8 or 9, wherein the activation command comprises a random access preamble and a random access channel resource that are used by the terminal device in a random access procedure, and correspondingly, the initiating a random access procedure on the PSCell comprises:
initiating the random access procedure on the PSCell based on the random access preamble and the random access channel resource.

12. The method according to claim 11, wherein the activation command is a physical downlink control channel order, the physical downlink control channel order carries indication information, and the indication information is used to indicate the terminal device to activate the SCG or the PSCell.

13. A dual connectivity configuration-based communication method, wherein the method is applied to a master node and a secondary node, a terminal device is connected to the master node and the secondary node, and the method comprises:
generating a deactivation command, wherein the deactivation command is used to deactivate a secondary cell group SCG of the terminal device served by the secondary node, or is used to deactivate a primary SCG cell PSCell in the SCG; and
sending the deactivation command to the terminal device.

14. The method according to claim 13, further comprising:
generating an activation command, wherein the activation command is used to activate the SCG or the PSCell; and
sending the activation command to the terminal device.

15. A terminal device, wherein the terminal device is connected to a master node and a secondary node, and the terminal device comprises:
a first receiving module, configured to receive a deactivation command, wherein the deactivation command is used to deactivate a secondary cell group SCG of the terminal device served by the secondary node, or is used to deactivate a primary SCG cell PSCell in the SCG; and
a deactivation module, configured to deactivate the SCG or the PSCell according to the deactivation command.

16. The terminal device according to claim 15, wherein the deactivation module is specifically configured to:
reset a medium access control MAC entity in the SCG; and/or
deactivate an active bandwidth part BWP associated with the PSCell; and/or
if there is an associated first deactivation timer in the PSCell and the first deactivation timer is in a running state, stop the first deactivation timer; and/or
deactivate an SCell in the SCG.

17. The terminal device according to claim 16, wherein the deactivation module is further configured to:
suspend a configured grant Type 1 associated with the PSCell and a configured grant Type 1 associated with the secondary cell SCell in the SCG; and/or
skip releasing physical uplink control channels PUCCHs and/or sounding reference signal resources on the PSCell and the SCell.

18. The terminal device according to claim 16, wherein the deactivation module is further configured to:
run a time alignment timer TAT, and perform at least one of the following:
clearing a hybrid automatic repeat request HARQ buffer of the PSCell, suspending the configured grant Type 1 associated with the PSCell, clearing a configured grant Type 2 associated with the PSCell and a configured downlink assignment associated with the PSCell, and clearing a physical uplink shared channel PUSCH resource used to report channel state information CSI on the PSCell.

19. The terminal device according to any one of claims 15 to 18, further comprising:
a second receiving module, configured to receive an activation command, wherein the activation command is used to activate the SCG or the PSCell; and
an activation module, configured to activate the SCG or the PSCell according to the activation command.

20. The terminal device according to claim 19, wherein the activation module is specifically configured to:
activate a first uplink BWP and/or a first downlink BWP associated with the PSCell, wherein the first uplink BWP is an uplink BWP indicated by using a first configuration parameter of the PSCell, and the first downlink BWP is a downlink BWP indicated by using a second configuration parameter of the PSCell; and/or
if there is an associated second deactivation timer in the PSCell and the second deactivation timer is in a stopped state, start the second deactivation timer; and/or
activate the SCell in the SCG; and/or
trigger a power headroom report.

21. The terminal device according to claim 20, wherein the activation module is further configured to: if the configured grant Type 1 configured on the PSCell is in a suspended state, initialize the configured grant Type 1 associated with the PSCell.

22. The terminal device according to any one of claims 15 to 21, further comprising:
an initiation module, configured to initiate a random access procedure on the PSCell.

23. The terminal device according to claim 22, wherein the initiation module is specifically configured to:
initiate the random access procedure on the PSCell if a time alignment timer TAT associated with the SCG or the PSCell is in a stopped state.

24. A network device, wherein the network device is a master node or a secondary node, a terminal device is connected to the master node and the secondary node, and the network device comprises:
a first generation module, configured to generate a deactivation command, wherein the deactivation command is used to deactivate a secondary cell group SCG of the terminal device served by the secondary node, or is used to deactivate a primary SCG cell PSCell in the SCG; and
a first sending module, configured to send the deactivation command to the terminal device.

25. The network device according to claim 24, further comprising
a second generation module, configured to generate an activation command, wherein the activation command is used to activate the SCG or the PSCell; and
a second sending module, configured to send the activation command to the terminal device.

26. A terminal device, comprising a memory and a processor, wherein
the memory is configured to store computer instructions, and the processor is configured to run the computer instructions stored in the memory, to implement the dual connectivity configuration-based communication method according to any one of claims 1 to 12.

27. A network device, comprising a memory and a processor, wherein
the memory is configured to store computer instructions, and the processor is configured to run the computer instructions stored in the memory, to implement the dual connectivity configuration-based communication method according to claims 13 or 14.

28. A storage medium, comprising a readable storage medium and computer instructions, wherein the computer instructions are stored in the readable storage medium, and the computer instructions are used to implement the dual connectivity configuration-based communication method according to any one of claims 1 to 14.

29. A program product, wherein the program product comprises a computer program, the computer program is stored in a readable storage medium, at least one processor of a communications apparatus can read the computer program from the readable storage medium, and the at least one processor executes the computer program to enable the communications apparatus to implement the method according to any one of claims 1 to 12 or the method according to claim 13 or 14.
